# EUROPÄISCHE PATENTANMELDUNG

(11) **EP 0 874 227 A2**
(43) Veröffentlichungstag der Anmeldung: **28.10.1998**
(21) Anmeldenummer: 98107549.2
(22) Anmeldetag: 24.04.1998
(51) Int. Cl.: G01F 23/04

(54) **Reinigungsvorrichtung für einen Ölpeilstab eines Kraftfahrzeugs**

(30) Priorität: 25.04.1997 DE 29707303 U
(71) Anmelder: Gozdowski, Bernd, 55545 Bad Kreuznach (DE)
(72) Erfinder: Gozdowski, Bernd, 55545 Bad Kreuznach (DE)
(74) Vertreter: Kirschner, Klaus Dieter, Dipl.-Phys.

(57) **Zusammenfassung**

Es wird offenbart, eine Reinigungsvorrichtung für einen Ölpeilstab eines Kraftfahrzeugs, aufweisend eine Hülle (2, 4; 2', 4'; 2'', 4''), in der ein Reinigungstuch (6; 6'; 6'') zum Abstreifen und/oder Aufnehmen von am Ölpeilstab anhängendem Öl angeordnet ist, wobei die Hülle zwei gegenüberliegende und miteinander verbundene Schichten (2, 4; 2', 4'; 2'', 4'') aufweist. Das Reinigungstuch (6, 6', 6'') ist an den Innenseiten der Schichten befestigt, und die Schichten sind an einer Kante (8, 8', 8'') unverbunden, so daß der Ölpeilstab in die Hülle einführbar ist.

## Beschreibung

Die vorliegende Erfindung betrifft eine Reinigungsvorrichtung für einen Ölpeilstab eines Kraftfahrzeugs.

Ölpeilstäbe werden bislang von Kraftfahrzeugbenutzern in der Weise gereinigt, daß ein an den Tankstellen zu Verfügung stehendes Einwegblatt verwendet wird, um den Ölpeilstab vor der Ölpeilmessung zu reinigen. Der Peilstab wird zunächst an seiner Spitze von dem anhaftenden Öl gesäubert. Danach wird er zur eigentlichen Ölstandsmessung eingeführt und wieder herausgezogen. Anhand der im unteren Ölpeilstabbereich angebrachten Markierung kann festgestellt werden, ob Öl fehlt oder der Ölstand für den weiteren Betrieb des Kraftfahrzeugs ausreichend ist.

Bei der manuellen Ölstandskontrolle kommt es häufig zu einer Verschmutzung von Bekleidungsteilen durch herabtropfendes Öl. Ferner besteht die Gefahr, daß der Benutzer seine Hände mit Öl verunreinigt.

Aus der DE-U 8432233 ist bereits ein V-förmiges Teil bekannt, an dessen Innenseiten ein schwammartiges Element befestigt ist. Das Teil dient zum Reinigen der Klingen von Messern oder ähnlichen Gegenständen. Eine besondere Eignung zum Abstreifen von Öl ist jedoch nicht gegeben.

Ferner ist aus der DE-U 7609351 eine Umhüllung bzw. Packung für ein Feuchtreinigungstuch bekannt. Die Umhüllung ist randseitig an allen vier Kanten geschlossen und läßt sich an einer gebildeten Perforationslinie öffnen. Das Feuchtreinigungstuch ist jedoch mit der Umhüllung nicht verbunden.

Aufgabe der vorliegenden Erfindung ist daher die Angabe einer Reinigungsvorrichtung für einen Ölpeilstab eines Kraftfahrzeugs, mit dem eine bequeme und verschmutzungssichere Ölstandskontrolle möglich ist.

Die Aufgabe wird erfindungsgemäß gelöst durch eine Reinigungsvorrichtung gemaß Anspruch 1. Die Reinigungsvorrichtung kann von dem Benutzer eines Kraftfahrzeugs, beispielsweise an einer Tankstelle, zur Ölstandskontrolle eingesetzt werden. Zu diesem Zweck wird der Ölpeilstab in die Hülle eingeführt und durch Kontakt mit dem Reinigungstuch gesäubert. Eine zusätzlich Hin- und Herbewegung des Ölpeilstabs erleichtert die Aufnahme des Öls, wobei vermieden wird, daß sich der Benutzer während des Kontrollvorgangs durch austretendes Öl beschmutzt oder seine Kleidung verunreinigt wird. Das abgestreifte Öl bleibt in der Hülle bzw. wird vom Reinigungstuch aufgenommen.

Durch manuellen seitlichen Druck auf die Ränder der Hülle wird diese geöffnet und für die Einführung des Peilstabs vorbereitet. Der eingeführte Ölpeilstab wird durch manuellen Druck auf die beiden Schichten zwischen den an den Innenseiten der Schichten befestigten Reinigungstuchabschnitten hin- und hergeführt und dabei gereinigt. Damit ist insbesondere die Möglichkeit einer mehrfachen Hin- und Herbewegung gegeben. Dies kann sinnvoll und erforderlich sein, wenn die Ölkontrolle durch Peilstab erst nach sehr langen Zeitintervallen durchgeführt wird und sodann ein etwas dickerer Altölfilm am Peilstab anhaftet. Nach der Benutzung kann die ölverschmutzte Reinigungsvorrichtung beispielsweise über den Tankstellenmüll entsorgt werden.

Das Reinigungstuch ist bevorzugt in gefalteter Form aufgenommen, und die beiden durch die Faltung gebildeten Abschnitte sind mit den Innenseiten der Schichten im wesentlichen ganzflächig verbunden, bevorzugt verklebt. In dieser herstellungstechnisch bevorzugten Form kann ein einfaches bevorzugt rechteckiges Reinigungstuch zur Anwendung gelangen. Das Reinigungstuch wird gefaltet und in gefalteter Form von der Hülle aufgenommen. Die Faltkante liegt bevorzugt an einem Rand der Hauptflächen, bevorzugt an einer Seitenkante.

Bevorzugt ist die Hülle durch zwei miteinander randseitig verbundene Schichten gebildet. Auch dies erleichtert die Herstellung. Dabei ist bevorzugt, daß die Schichten rechteckig sind und längs einer (kürzeren) Querkante unverbunden sind. Die Hülle ist somit an drei Seiten, bevorzugt mit einer Schweißnaht, geschlossen. An der dritten Seite ist sie jedoch zur Einführung des ölverschmutzten Peilstabs geöffnet.

In einer alternativen Ausführungsform sind die Schichten rechteckig, und längs einer Kante ist eine Perforationslinie gebildet, um die Hülle manuell zu öffnen. Mit dieser Ausführungsform ist ein allseitiger Verschluß der Reinigungsvorrichtung gewährleistet, der insbesondere für längere Lagerperioden eine Verschmutzungssicherheit gewährleistet.

Alternativ sind die Schichten dreieckig, bevorzugt gleichschenklig, und längs einer Kante, bevorzugt an der Grundseite, unverbunden. In dieser Ausführungsform ist die Reinigungsvorrichtung in Einführrichtung des Ölpeilstabs zulaufend ausgebildet, was den Materialaufwand verringert. Ein gleichschenkliges Dreieck ist für die Form der Schichten bevorzugt, wobei die Grundlinie wesentlich kürzer als die Länge der Schenkel ist.

In einer weiteren Alternative sind die Schichten kreisförmig und längs mindestens eines Kreissegments unverbunden oder perforiert miteinander verbunden. In dieser Ausfühungsform wird der Ölpeilstab durch den unverbundenen bzw. durch Perforation verbundenen Abschnitt des Kreissegmentes eingeführt und gereinigt.

Die Schichten sind aus Kunststoffolie, Papier oder einer Verbundschicht aus Kunststoff und Papier, insbesondere PE/Papier gebildet. Bei Verwendung von Papier in der Außenfläche der Schichten können bevorzugt Werbeschriften aufgebracht werden.

Die Hülle hat bevorzugt eine Länge zwischen 80 und 100 mm und eine Breite von 50 bis 70 mm. Damit sind für herkömmliche Ölpeilstäbe ausreichende Abmessungen geschaffen.

Das Reinigungstuch besteht bevorzugt aus einem saugfähigem Vliesmaterial. Dabei ist die Gefahr eines Heraustropfens von abgestreiftem Öl aus der Reinigungsvorrichtung wirksam vermieden.

Bevorzugt sind an den Enden der vorgesehenen Perforationslinien Einreißkerben gebildet, um die manuelle Abtrennung des perforierten Abschnitts zu erleichtern.

Weitere Vorteile, Merkmale und Anwendungsmöglichkeiten ergeben sich aus der nachfolgenden Beschreibung von drei bevorzugten Ausführungsbeispielen in Verbindung mit den Zeichnungen.
- Fig. 1: zeigt eine Aufsicht auf eine Ausführungsform einer rechteckigen Reinigungsvorrichtung mit offener Seite.
- Fig. 2: zeigt eine Aufsicht auf eine rechteckige Reinigungsvorrichtung mit perforierter Seite.
- Fig. 3: zeigt eine Aufsicht auf eine dreieckige Reinigungsvorrichtung mit offener Seite.
- Fig. 4: zeigt eine Aufsicht auf eine kreisrunde Reinigungsvorrichtung mit Perforationslinie.

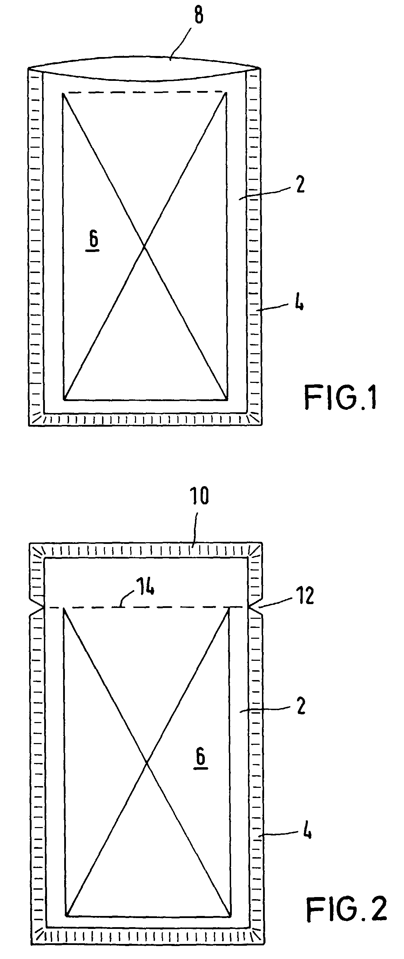

Fig. 1 zeigt eine Aufsicht auf eine rechteckige Reinigungsvorrichtung. Die Reinigungsvorrichtung besteht aus einer obenliegenden Kunststoff/Papier-Verbundschicht 2 und einer darunterliegenden Kunststoff/Papier-Verbundschicht 4, die an drei Randkanten miteinander verschweißt sind. An einer vierten Randkante 8 sind die beiden Verbundschichten 2, 4 nicht miteinander verbunden und geben somit einen Zugang in den zwischen den Verbundschichten gebildeten Innenraum frei. Im Innenraum ist ein aus saugfähigem Vliesmaterial gebildetes gefaltetes Reinigungstuch 6 derart aufgenommen, daß die durch die Faltung gebildeten Abschnitte mit der Innenseite der Verbundschicht 2 bzw. der Innenschicht der Verbundschicht 4 im wesentlichen vollflächig verklebt sind. Bei Öffnung der durch die Verbundschichten 2, 4 gebildeten Hülle durch randseitigen manuellen Druck, öffnet sich die Hülle und gleichzeitig auch das mit der Hülle verbundene Reinigungstuch, wodurch die Einführung eines Ölpeilstabs möglich ist. Nach Einführung des Ölpeilstabs kann durch senkrecht gerichteten Druck auf die Verbundschichten 2, 4 der Ölpeilstab eingeklemmt und nach Hin- und Herbewegung gereinigt werden. Die gezeigte Hülle hat eine Abmessung von 60 mm in der Breite und 90 mm in der Höhe. Die Verbundschichten 2, 4 sind bevorzugt Papier/PE in flüssigkeitsdichter und druckfähiger Form.

Fig. 2 zeigt eine Ausführungsform ähnlich Fig. 1, jedoch mit einer an einer Kante 10 randseitig verschweißten Hülle. Es ist im oberen Bereich der beiden Verbundschichten 2, 4 eine Perforationslinie 14 gestanzt, die mit zwei randseitig gebildeten Einreißkerben 12 zusammenwirkt. An den Kerben kann der obere Teil der Verbundschichten 2, 4 an der Perforationslinie 14 abgetrennt werden. Dadurch wird der Zugang zu dem innenliegenden Reinigungstuch 6 geöffnet.

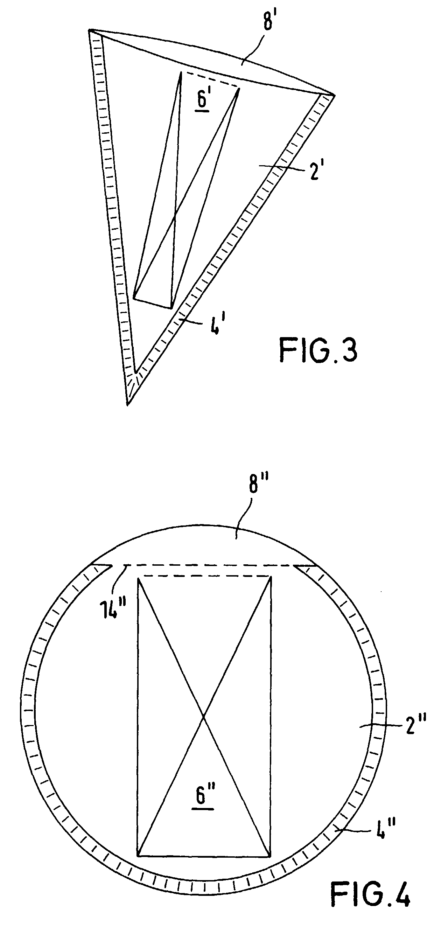

Fig. 3 zeigt eine Ausführungsform mit einer dreieckigen, und zwar gleichschenkligen Gestaltung der Verbundschichten 2' und 4'. Das eingelegte Reinigungstuch 6' ist passend zu dieser Form gestaltet. Zwischen den unverbundenen Kanten 8' der Hülle kann der Ölpeilstab eingeführt werden..

Fig. 4 zeigt eine weitere Ausführungsform in kreisrunder Gestaltung. Die beiden Verbundschichten 2'', 4'' sind randseitig miteinander verschweißt, mit Ausnahme eines oberen Bereichs 8'', der entweder geöffnet ist (Variante 1) oder geschlossen und mit einer Perforationslinie 14'' (Variante 2) verbunden ist. Das innenliegende Reinigungstuch 6'' ist entsprechend geformt und mit den Innenflächen der Verbundschichten 2'', 4'' verbunden.

Das in die Hülle eingelegte Reinigungstuch ist auf seiner gesamten den Verbundschichten zugewandten Fläche mit diesen verklebt. Das Reinigungstuch kann einstückig und beispielsweise gefaltet sein. Es kann aber auch aus mehreren unverbundenen Abschnitten bestehen, die einzeln mit den Verbundschichten verbunden, insbesondere verliebt sind. Das rechteckige Reinigungstuch hat im gefalteten Zustand ein Innenformat von 50 mm Breite und 70 mm Höhe. Im entfalteten Zustand hat es somit eine Breite von etwa 100 mm.

## Patentansprüche

1. Reinigungsvorrichtung für einen Ölpeilstab eines Kraftfahrzeugs, aufweisend eine Hülle (2, 4; 2', 4'; 2'', 4''), in der ein Reinigungstuch (6; 6'; 6'') zum Abstreifen und/oder Aufnehmen von am Ölpeilstab anhängendem Öl angeordnet ist, wobei die Hülle zwei gegenüberliegende und miteinander verbundene Schichten (2, 4; 2', 4'; 2'', 4'') aufweist, das Reinigungstuch (6, 6', 6'') an den Innenseiten der Schichten befestigt ist, und die Schichten an einer Kante (8, 8', 8'') unverbunden sind, so daß der Ölpeilstab in die Hülle einführbar ist.

2. Reinigungsvorrichtung nach Anspruch 1, **dadurch gekennzeichnet, daß** das Reinigungstuch (2, 4) in gefalteter Form aufgenommen ist und die beiden durch die Faltung gebildeten Abschnitte mit den Innenseiten der Schichten im wesentlichen ganzflächig verbunden, bevorzugt verliebt sind.

3. Reinigungsvorrichtung nach einem der vorhergehenden Ansprüche, **dadurch gekennzeichnet, daß** die Hülle durch zwei miteinander randseitig verschweißte Schichten (2, 4; 2', 4'; 2'', 4'') gebildet ist.

4. Reinigungsvorrichtung nach Anspruch 3, **dadurch gekennzeichnet, daß** die Schichten rechteckig sind und längs einer Querkante unverbunden sind.

5. Reinigungsvorrichtung nach Anspruch 1, **dadurch gekennzeichnet, daß** die Schichten rechteckig sind und längs einer Kante (10) eine Perforationslinie (14) gebildet ist, um die Hülle manuell zu öffnen.

6. Reinigungsvorrichtung nach Anspruch 3, **dadurch gekennzeichnet, daß** die Schichten dreieckig, bevorzugt gleichschenklig, sind, und längs einer Seite (8''), bevorzugt an der Grundseite, unverbunden sind.

7. Reinigungsvorrichtung nach Anspruch 3, **dadurch gekennzeichnet, daß** die Schichten kreisförmig sind und längs mindestens eines Kreissegmentes unverbunden oder perforiert verbunden sind.

8. Reinigungsvorrichtung nach Anspruch 4, **dadurch gekennzeichnet, daß** die Hülle eine Länge von 80 bis 100 mm und eine Breite von 50 bis 70 mm aufweist.

9. Reinigungsvorrichtung nach einem der vorhergehenden Ansprüche, **dadurch gekennzeichnet, daß** das Reinigungstuch aus einem saugfähigen Vliesmaterial besteht, und die Schichten aus Kunststoffolie, Papier oder einer Verbundfolie aus Kunststoff und Papier gebildet sind.

10. Reinigungsvorrichtung nach einem der Ansprüche 6 oder 8, **dadurch gekennzeichnet, daß** an den Enden der Perforationslinie Einreißkerben (12) gebildet sind.
